Europäisches Patentamt

European Patent Office

Office européen des brevets

(19)

(11) Veröffentlichungsnummer: **0 416 105 A1**

(12) **EUROPÄISCHE PATENTANMELDUNG**
**veröffentlicht nach Art. 158 Abs. 3**
**EPÜ**

(21) Anmeldenummer: 89907364.7

(22) Anmeldetag: 03.02.89

(86) Internationale Anmeldenummer:
**PCT/SU89/00032**

(87) Internationale Veröffentlichungsnummer:
**WO 90/08967 (09.08.90 90/19)**

(51) Int. Cl.5: **G02B 5/28**, G02B 26/00

(43) Veröffentlichungstag der Anmeldung:
**13.03.91 Patentblatt 91/11**

(84) Benannte Vertragsstaaten:
**AT DE FR GB IT NL SE**

(71) Anmelder: **TOMSKY GOSUDARSTVENNY UNIVERSITET IMENI V.V. KUIBYSHEVA**
**pr. Lenina 36**
**Tomsk, 634010(SU)**

(72) Erfinder: **ELISEEV, Alexandr Alexeevich**
**ul. Kartashova, 31b-4**
**Tomsk, 634041(SU)**
Erfinder: **POPOVA, Tamara Nikolaevna**
**pr. Lenina, 15v-21**
**Tomsk, 634028(SU)**
Erfinder: **RAVODINA, Olga Viktorovna**
**ul. Mokrushina, 18a-67**
**Tomsk, 634034(SU)**
Erfinder: **STENINA, Violetta Vasilievna**
**ul. Sovetskaya, 48-32**
**Tomsk, 634029(SU)**

(74) Vertreter: **Patentanwälte Beetz sen. - Beetz jun. Timpe - Siegfried - Schmitt-Fumian**
**Steinsdorfstrasse 10**
**W-8000 München 22(DE)**

(54) **SELEKTIVER INTERFERENZLICHTFILTER UND OPTISCHE ANORDNUNG DIE DIESEN BENUTZT.**

(57) Das Lichtfilter weist eine Schichtstruktur (1) auf, deren Schichten (2 bis 5) für eine gerichtete Lichtstrahlung (17) reflektierend und äquidistant mit einem sich nach der Tiefe periodisch ändernden Brechungsindex ausgeführt sind. Die Schichten (2 bis 5) sind durch Bestrahlung eines vor einem Spiegel (9) erst im Vorgang der Bestrahlung anzuordnenden Elements aus einem für die Strahlung durchsichtigen lichtempfindlichen Werkstoff mit einer monochromatischen Strahlung 6 einer vorgegebenen Wellenlänge gebildet. Im optischen Gerät dient als selektierendes Element das genannte Lichtfilter (68), das mit der Möglichkeit einer Schwenkung um die auf dieses gerichtete Lichtstrahlung (17) angeordnet ist.

FIG. 1

EP 0 416 105 A1

FIG. 18

# SELEKTIVES INTERFERENZLICHTFILTER UND OPTISCHES GERÄT UNTER BENUTZUNG DESSELBEN

Gebiet der Technik

Die Erfindung bezieht sich auf optische Geräte und betrifft insbesondere selektive Interferenzlichtfilter und optische Geräte unter Benutzung derselben. Die Erfindung kann in der Spektroskopie, Lichttechnik, im optischen und Lasergerätebau, bei der Durchführung von Weltraumforschungen verwendet werden.

Vorhergehender Stand der Technik

Es sind Interferenzlichtfilter bekannt, die zwei oder mehrere Gruppen einander abwechselnder Schichten aus Isolierstoff mit unterschiedlichem Brechungsindex enthalten, die eine optische Dicke aufweisen, die eine Viertelwellenlänge eines auf ein Lichtfilter gerichteten Lichtstroms (SU, A, 539284; SU, A, 881647) beträgt.

Derartige Filter sind kompliziert in der Herstellung, auf sie werden unbedingt Schutzüberzüge aufgetragen, die, indem sie den Prozess der Herstellung der Lichtfilter zusätzlich erschwierigen, auch die optischen Eigenschaften des Lichtfilters, d.h. die Strahlungsdurchlässigkeit, verschlechtern.

Für die Herstellung derartiger Lichtfilter können ausserdem Werkstoffe erhähter chemischer Reinheit notwendig werden.

In den bekannten Lichtfiltern ist eine stufenlose Umstellung der Wellenlänge in sehr engen Grenzen möglich.

Es sind selektive Interferenzfilter bekannt, die eine Schichtstruktur aufweisen, von deren jeder Schicht eine auf das Lichtfilter gerichtete Lichtstrahlung reflektiert wird. Die Schichtstruktur wird aus einer auf eine Metallunterlage aufgebrachten Dielektrikumschicht, die eine durch $\pi$ teilbare Halbwertsbreite einer Phase aufweist, und einer geraden Anzahl von einander abwechselnden Viertelwellenschichten aus zwei Dielektrika mit einem hohen bzw. niedrigen Brechungsindex gebildet. Diese Schichtkombination ist von oben mit einer metallen Absorptionsschicht abgedeckt, die eine Dicke besitzt, die viel dünner als die Arbeitswellenlänge ist. ("Optika i spektroskopia /Optik und Spektroskopie/", Bd. 40, 1976, Verlag "Nauka", Leningrad, N.D.Goldina, Ju.V.Troitsky "Uzkopolosnye filtry v otrazhonnom svete /Schmalbandfilter im reflektierten Licht/", S. 935 bis 938).

Derartiges bekanntes Lichtfilter reflektiert ausser den selektiven Wellenlängen, die über die Grenzen des Reflexionsbandes hinausgehen und Störungen darstellen. Darüber hinaus weisen diese Lichtfilter Nachteile auf, die den vorstehend dargelegten gleich sind.

Es sind optische Geräte, nämlich Spektralgeräte (I.V.Peisakhson "Optika spektralnykh priborov /Optik der Spektralgeräte/", 1975, Verlag "Mashinostroenie", Leningrad, S. 5 bis 10), bekannt, die einen Eintritts- und einen Austrittsspalt, ein Kollimator- und ein Kammerobjektiv, ein selektierendes, beispielsweise ein dispergierendes System, das auf der Basis eines dispergierenden Primas oder eines Beugungsgitters hergestellt ist, und eine Empfangseinrichtung enthalten. Derartige Spektralgeräte gestatten es, die Arbeitswellenlänge stufenlos zu ändern, das Vorhandensein eines schmalen Eintrittsspaltes begrenzt aber die Lichtstärke dieser Geräte im Hinblick auf den Lichtstrom, weshalb sich nur eine intensive Strahlung untersuchen lässt.

Es sind ferner optische Geräte bekannt, die eine Quelle kontinuierlicher Strahlung, ein oder zwei selektierende Elemente, eine Halterung oder eine Küvette für das zu bestrahlende Objekt enthalten. Diese Geräte können Objektive und einen Strahlungsempfänger enthalten. In diesen Geräten dienen als selektierendes Element entweder ein Prisma oder ein Beugungsgitter oder Lichtfilter (V.V.Lebedeva "Tekhnika opticheskoi spektroskopii /Technik der optischen Spektroskopie/", 1977, Verlag der Moskauer Universität, Moskau, S. 166).

Die Anwendung des Prismas und des Beugungsgitters erfordert die Einführung eines die Lichtstärke begrenzenden Spaltes. Werden als selektierendes Element Lichtfilter eingesetzt, so erfolgt die Selektion der Wellenlängen diskret, wozu Sätze von nach den Wellenlängen nicht umstellbaren Lichtfiltern angewendet werden. Die Anwendung eines nach den Wellenlängen umstellbaren Keil-Lichtfilters macht auch die Einführung eines die Lichtstärke beschränkenden Spaltes notwendig. Ausserdem wird das Keil-Interferenzlichtfilter durch eine keilförmige Aufdampfung von Schichten reiner Werkstoffe in Wakuum gefertigt. Diese Technologie ist sehr kompliziert, weshalb die Geräte mit den Keilfiltern keine weite Anwendung finden. Die Erfindung bezweckt die Schaffung eines selektiven schmalbandigen, nach den Wellenlängen umstellbaren Interferenzlichtfilters, das eine einfachere Fertigungstechnologie aufweist und multifunktional ist.

EP 0 416 105 A1

Offenbarung der Erfindung

Der Erfindung liegt die Aufgabe zugrunde, ein selektives Interferenzlichtfilter und ein optisches Gerät unter Benutzung desselben zu schaffen, die es gestatten, die Arbeitswellenlänge bei Änderung des Einfallswinkels einer Lichtstrahlung durch Änderung des Gangunterschiedes von Interferenzstrahlen in weiten Grenzen stufenlos umzustellen.

Die gestellte Aufgabe wird dadurch gelöst, das in dem selektiven Interferenzlichtfilter, das eine Schichtstruktur aufweist, deren jede Schicht für eine auf das Lichtfilter gerichtete Strahlung reflektierend ist, gemäss der Erfindung die Schichten der Schichtstruktur äquidistant mit einem sich nach der Tiefe periodisch ändernden Brechungsindex ausgeführt und durch Bestrahlung eines vor einem Spiegel erst im Vorgang der Bestrahlung angeordneten Elementes aus einem für die Strahlung durchlässigen lichtempfindlichen Werkstoff mit mindestens einer monochromatischen Strahlung vorgegebener Wellenlänge gebildet sind.

Im Vergleich zu den durch Vakuumbedampfung von planparallelen Schichten reiner Werkstoffe erzeugten Interferenzlichtfiltern zeichnen sich die erfindungsgemässen Lichtfilter durch die Möglichkeit einer stufenlosen Umstellung der Arbeitswellenlänge in recht weiten Grenzen aus.

Die Schichtstruktur reflektiert verschiedene Wellenlängen in Abhängigkeit vom Winkel des Lichteinfalls auf diese Struktur.

Der Umstellbereich der Länge einer von einer Schichtstruktur rückgestrahlten Welle hängt von einem effektiven Brechungsindex dieser Struktur ab, und je grösser der Brechungsindex ist, desto schmäler ist der Umstellbereich. Zur selben Zeit ist der Brechungsindex um so grösser und die Spektralbande um so schmäler, je grösser die Schichtzahl der Struktur und je grösser die Differenz der Brechungsindexe der Schichten ist.

Das zu bestrahlende Element kann entweder aus einer Fotoemulsion auf der Basis von Silbersalzen oder aus bichromierter Gelatine, oder aus fotoregistrierendem Polymerisationsmittel, oder aus fotopolymerisierender Stoffkomposition hergestellt werden.

Durch die Vakuumbedampfung werden in der Regel höchstens 30 bis 40 Schichten erzeugt. Die weitere Vergrösserung der Schichtzahl führt zu einer Speicherung von Defekten, weshalb sie keine Vergrösserung des Reflexionsfaktors und keine Einengung der Spektralbande bewirkt. Um bei einer geringen Schichtzahl einen grossen Reflexionsfaktor und eine schmale Schpektralbande zu haben, muss man Werkstoffe mit einer grossen Differenz von Brechungsindexen $n_1$ und $n_2$ nehmen. Da $n_1$ unter 1,3 nicht liegen darf, nimmt man $n_2$ in der Regel grösser als 2. Im Ergebnis erweist sich der effektive Brechungsindex eines Schichtsystems als in der Nähe von 2 oder darüber liegend.

Das Verfahren zur Herstellung der erfindungsgemässen Lichtfilter gestattet es, Lichtfilter mit einer grossen Schichtzahl (von ca. 100 bis 200) bei einer automatisch einzuhaltenden Genauigkeit von sich ergebenden Schichtdicken (halbe Wellenlänge) zu fertigen. Der effektive Brechungsindex des Schichtsystems bleibt nahe am Brechungsindex des lichtempfindlichen Ausgangsstoffes liegen. (Für eine Fotoemulsion aus Silbersalzen beträgt er ca. 1,5). Die grosse Schichtzahl sichert bei einem niedrigen Aussteuerungsgrad des Brechungsindexes einen hohen Reflexionsfaktor und eine schmale Spektralbande (nicht schlechter als bei den durch Bedampfung erzeugten Filtern), während der niedrige effektive Brechungsindex einen weiten Umstellbereich für die Wellenlänge gewährleistet.

Es ist zweckmässig, dass das Lichtfilter ein Substrat aufweist, auf welches eine Schichtstruktur aufgebracht ist. Das Lichtfilter, welches ein Substrat aufweist, auf das eine Schichtstruktur aufgetragen ist, besitzt gegenüber einem Lichtfilter ohne Substrat folgende Vorteile: grosse Festigkeit aufgrund der Festigkeit des Substrats, höheren Reflexionsfaktor, schmälere Spektralbande und bessere Kontrast wegen der Entfernung eines Strahls aus der Interferenz, der an der Grenze Luft - Schichtstruktur reflektiert wird. In Abhängigkeit vom Stoff des Substrats und dem Arbeitswellenbereich kann das Substrat zur Unterdrückung von Interferenzmaxima höherer Ordnungen gegenüber der ersten Arbeitsordnung dienen.

Als Substrat kann mindestens ein Prisma, auf dessen Reflexionsfläche eine Schichtstruktur aufliegen kann, während die Lichtstrahlung auf eine beliebige freie Prismenfläche gerichtet werden kann, oder mindestens ein optischer Keil, auf dessen eine Fläche eine Schichtstruktur aufgebracht werden kann, während die Lichtstrahlung auf dessen andere Fläche gerichtet werden kann, oder ein Linsenform aufweisendes Element dienen.

Das Lichtfilter mit einem prismenförmigen Substrat erweitert den Umstellbereich für die Arbeitswellenlängen.

Das Lichtfilter, in welchem der optische Keil als Substrat auftritt, hat gegenüber einem Lichtfilter mit einem flachen Substrat den Vorteil, das der an der Grenze Luft - Substrat reflektierte Strahl von den Interferenzstrahlen nicht nur linear abgetrennt ist, sondern auch eine andere Richtung aufweist, wie dies

4

auch beim prismenförmigen Substrat der Fall ist. Zur selben Zeit bleibt im Lichtfilter mit dem Keil der Vorteil des Lichtfilters mit dem flachen Substrat beibehalten - es besitzt kleinere Abmessungen, während seine Eintritts- und Austrittsfläche zusammenfallen.

Das Lichtfilter mit dem linsenförmigen Substrat stellt nicht nur ein filterndes, sondern auch ein fokussierendes optisches Element dar.

Bei der Bestrahlung eines Elements aus lichtempfindlichem Material durch zwei oder mehrere monochromatische Strahlungen mit verschiedenen Wellenlängen kann die Schichtstruktur jeweils zwei oder mehrere Kombinationen äquidistanter Schichten aufweisen, deren jede einer eigenen Wellenlänge der monochromatischen, Strahlung zugeordnet ist.

Derartiges Lichtfilter ist polychrom. Es reflektiert zwei oder mehr Wellenlängen zugleich, deren jede bei Änderung des Winkels des Einfalls der Strahlung auf das Lichtfilter umgestellt wird.

Zweckmässig ist, dass in der Schichtstruktur die Kombinationen der äquidistanten Schichten im Strahlengang der auf die Schichtstruktur gerichteten Lichtstrahlung hintereinander angeordnet sowie räumlich zur Deckung gebracht sind.

Derartiges Lichtfilter wird viel einfacher als ein ähnliches bekanntes Lichtfilter hergestellt. Der räumliche Zusammenfall der Kombinationen der äquidistanten Schichten gestattet es, bei der Reflexion das Verhältnis der vorgegebenen Wellenlängen mit einer hohen Genauigkeit zu erhalten, denn die verschiedenen Kombinationen der Schichten werden gleichzeitig (zum selben Zeit-moment) erhalten.

Es erwies sich auch als zweckmässig, dass zwei oder mehr Kombinationen der äquidistanten Schichten durch Parallelbündel der monochromatischen Strahlung gebildet sind, wobei die Schichtstruktur Einzelabschnitte enthält, die Kombinationen der äquidistanten Schichten darstellen, die Einzelabschnitten der Wellenfront der auf die Schichtstruktur gerichteten Lichtstrahlung entsprechen.

Derartiges Lichtfilter liefert bei der Reflexion räumlich auseinandergebrachte Strahlen unterschiedlicher Wellenlängen.

Es erwies sich als vorteilhaft, dass die Schichtstruktur Schichten aufweist, deren Aquidistanz im Querschnitt der Schichtstruktur durch eine Ebene erfüllt wird, die gleichzeitig zu einer beliebigen Schicht und zu der Richtung der Änderung der Schichtdicke perpendikular ist, und durch eine Strahlung gebildet ist, die durch ein kontinuierliches Spektrum gekennzeichnet wird.

Derartiges Lichtfilter erlaubt es, die Wellenlänge nicht nur durch Änderung des Winkels des Lichteinfalls auf das Lichtfilter, sondern auch durch Längsverschiebung des Lichtfilters in der Nähe einer Spaltblende umzustellen. Gegenüber dem bekannten Keil-Zichtfilter, das durch eine keilförmige Vakuumbedampfung von Stoffschichten erzeugt ist, wird das vorliegende Lichtfilter durch eine sehr einfache Fertigungstechnologie gekennzeichnet.

Auf der Schichtstruktur kann eine Einrichtung für deren Zusammendrücken angeordnet werden, die für eine lineare Änderung der Dicke der äquidistanten Schichten längs der Schichtstruktur sorgt.

Deshalb wird in der Fertigungstechnologie für das Lichtfilter die Änderung des Brechungsindexes mit sehr einfachen Mitteln erreicht.

Das Prisma kann im Schicht die Form eines Rhomboids aufweisen, auf dessen zwei symmetrische Seitenflächen gleiche Schichtstrukturen aufgebracht sind.

Das Prisma kann auch zwei Paare zueinander symmetrischer Seitenflächen mit einer gemeinsamen Symmetrieebene aufweisen, und auf jeder Seitenfläche eines Paares können die Schichtstrukturen aufliegen.

Derartiges Lichtfilter ist selektiv sowohl nach der Wellenlänge als auch nach dem Einfallswinkel. Es reflektiert die Lichtstrahlung nur einer Wellenlänge, die sich in einer bestimmten Richtung ausbreitet, und kann ausserdem kleinere Abmessungen und Masse durch Entfernung nichtfunktionierender Teile des Rhomboids aufweisen.

Für die genaue Einstellung der abgefilterten Wellenlänge und für die Kontrolle des Winkels des Lichteinfalls auf die Schichtstruktur erwies es sich als vorteilhaft, dass das Lichtfilter einen Körper aufweist, in dessen Wänden zwei Öffnungen für den Strahlendurchgang zur Schichtstruktur bzw. für den Austritt der abgefilterten Strahlung ausgeführt sind.

Die Schichtstruktur kann im Körper schwenkbar und/oder linear verschiebbar in bezug auf die geführten Strahlung angeordnet sein.

In diesem Fall ist die austretende abgefilterte Strahlung durch die Öffnung im Körper nicht begrenzt, was bei denjenigen Konstruktionen des Lichtfilters von Bedeutung sein kann, wo sich die abgefilterte Strahlung im Raum verschiebt.

Das Lichtfilter kann auch einen Körper aufweisen, als dessen eine Wand die Eintrittsfläche des Prismas oder des optischen Keiles dienen wird, während an der gegenüberliegenden Körperwand eine Blende für den Strahlendurchgang zur Schichtstruktur angebracht werden kann, wobei die Schichtstruktur und die Blende mit Möglichkeit einer gegenseitigen Schwenkung und/oder einer linearen Verschiebung ausgeführt werden können.

In derartigen Lichtfiltern kann die Strahlenrichtung und/oder die Länge der reflektierten Welle abgetastet werden.

Die Aufgabe wird auch dadurch gelöst, dass in einem optischen Gerät, das ein selektierendes Element zur Abtrennung einer oder mehrerer Wellenlängen von einer darauf einfallenden Strahlung enthält, gemäss der Erfindung als selektierendes Element das vorliegende selektive Interferenzlichtfilter eingesetzt ist, das um eine auf dieses gerichtete Lichtstrahlung schwenkbar angeordnet ist.

Dieses Gerät weist eine grössere Lichtstärke gegenüber den bekannten auf.

Das erfindungsgemässe Lichtfilter sichert eine stufenlose Änderung der Arbeitswellenlänge, hat eine schmale Spektralbande, einen hohen Kontrast und Reflexionsfaktor.


Ausführungsbeispiel der Erfindung

Die Erfindung soll durch die nachstehende Beschreibung von Ausführungsformen anhand der beiliegenden Zeichnungen näher erläutert werden. Es zeigt:

Fig. 1 ein erfindungsgemässes selektives Interferenzlichtfilter;

Fig. 2 dto. mit einem prismenförmigen Substrat erfindungsgemäss;

Fig. 3 dto. mit einem Substrat in Form eines optischen Keiles gemäss der Erfindung;

Fig. 4 dto. mit einem linsenförmigen Substrat gemäss der Erfindung;

Fig. 5 ein erfindungsgemässes Lichtfilter mit mehreren Prismen;

Fig. 6 ein erfindungsgemässes Lichtfilter mit mehreren ioptischen Keilen;

Fig. 7 ein erfindungsgemässes Lichtfilter mit Kombinationen von im Strahlengang hintereinander angeordneten Schichten;

Fig. 8 ein erfindungsgemässes Lichtfilter mit räumlich auseinandergebrachten Kombinationen der Schichten;

Fig. 9 ein erfindungsgemässes Lichtfilter mit räumlich zur Deckung gebrachten Kombinationen der Schichten;

Fig. 10 ein erfindungsgemässes Lichtfilter mit einer stufenlosen Umstellung der Wellenlänge einer abgefilterten Strahlung;

Fig. 11 ein erfindungsgemässes Lichtfilter mit einer Einrichtung für ein Zusammendrücken einer Schichtstruktur;

Fig. 12 dto, mit zusammengedrückten Schichten erfindungsgemäss;

Fig. 13 ein erfindungsgemässes Lichtfilter mit einem im Schnitt die Form eines Rhomboids aufweisenden Substrat;

Fig. 14 ein erfindungsgemässes Lichtfilter mit einem im Schnitt die Form eines gleichschenkligen Dreiecks aufweisenden Substrat;

Fig. 15 ein erfindungsgemässes Lichtfilter mit einem Substrat komplizierter Form;

Fig. 16 ein erfindungsgemässes Lichtfilter mit einem Körper;

Fig. 17 eine weitere Ausführungsform des erfindungsgemässen Lichtfilters mit einem Körper;

Fig. 18 ein Prinzipschaltbild eines erfindungsgemässen optischen Geräts.


Bevorzugte Ausführungsform der Erfindung

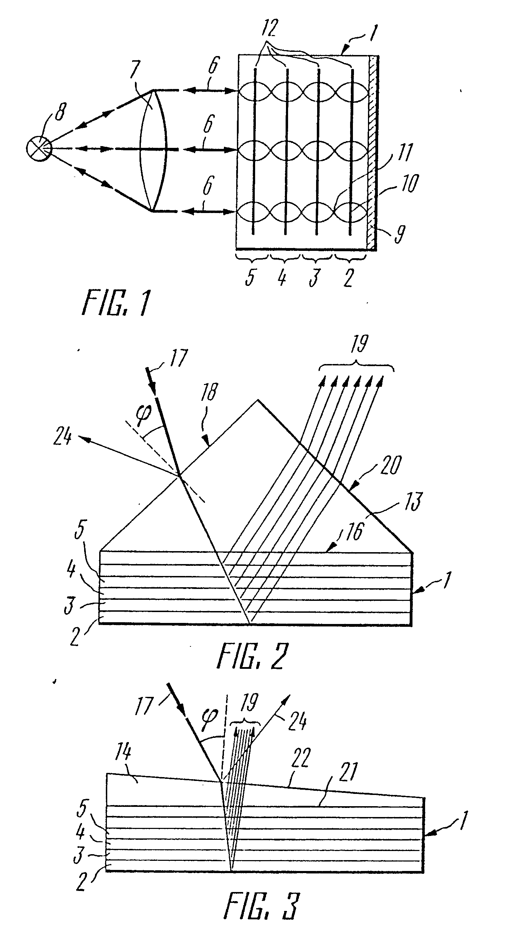

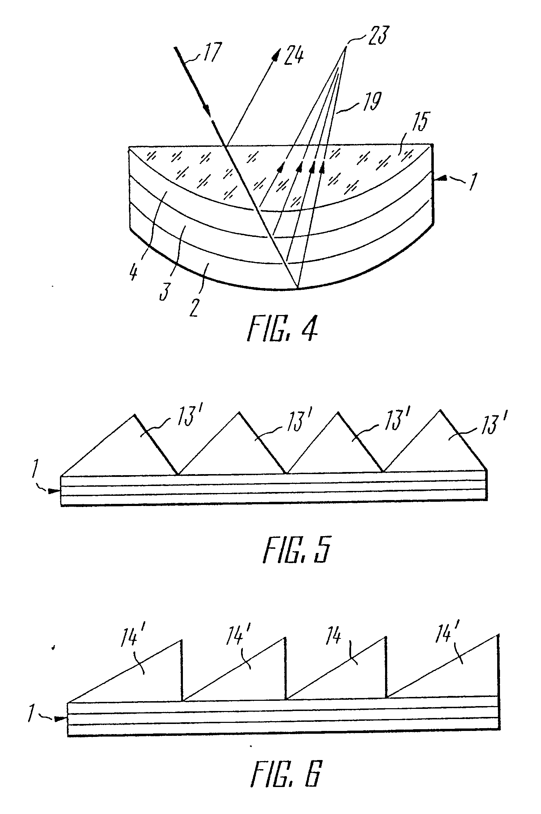

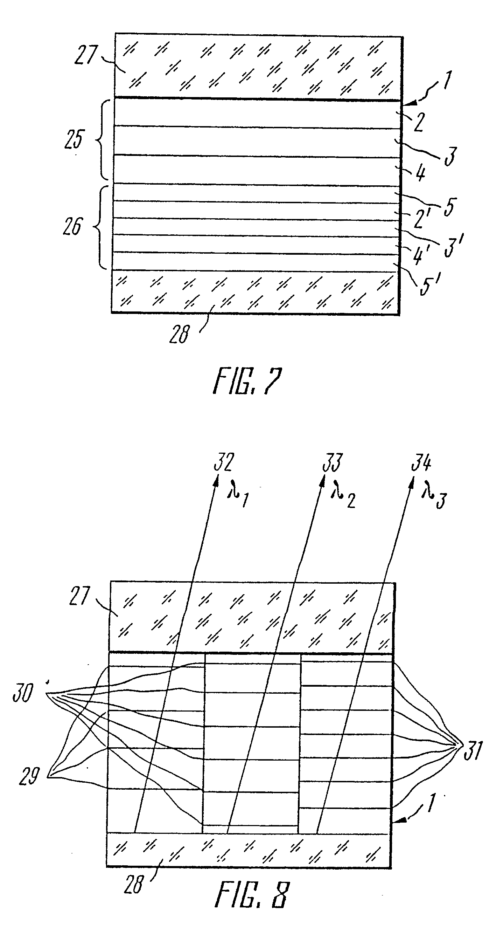

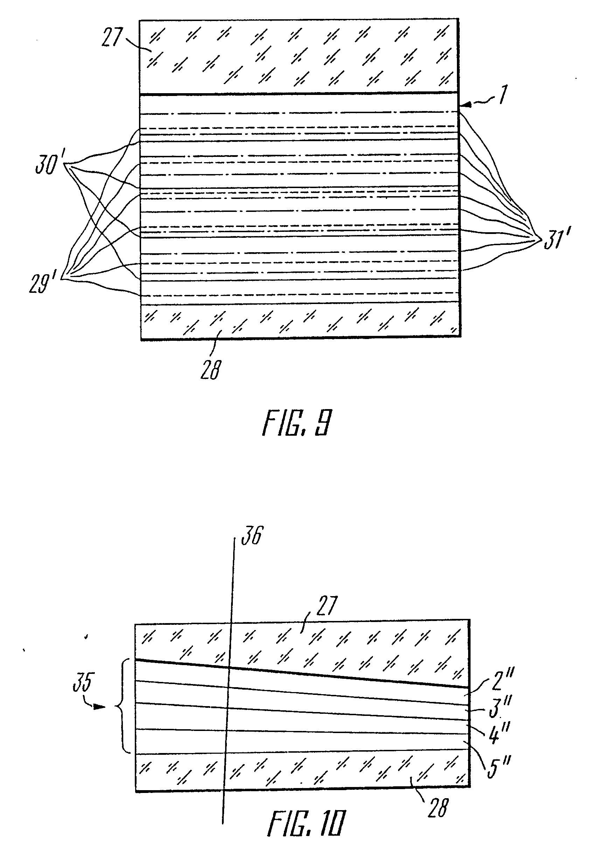

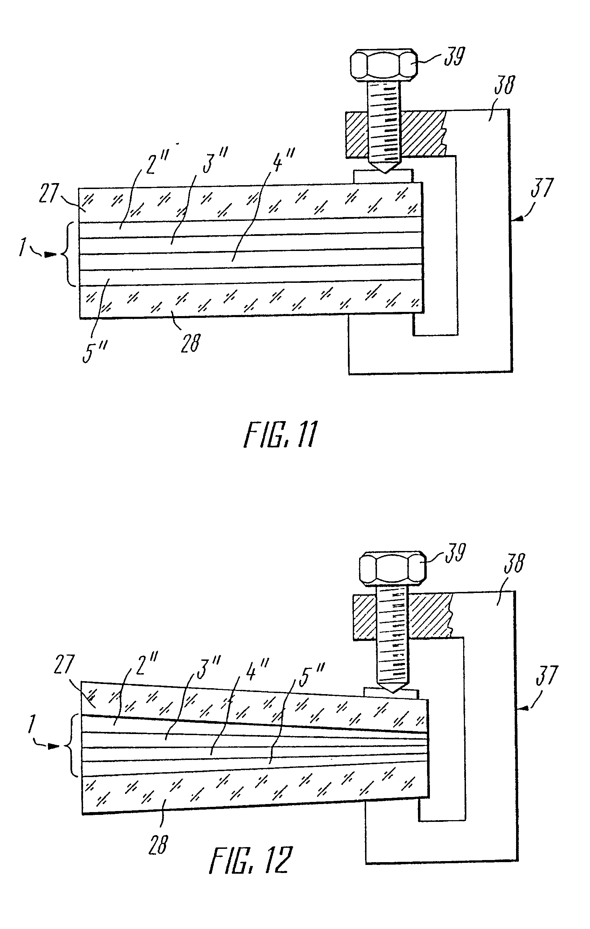

Das selektive Interferenzlichtfilter weist eine Schichtstruktur 1 (Fig. 1) auf, die äquidistante Schichten 2, 3, 4 und 5 mit einem sich nach der Tiefe periodisch ändernden Brechungsindex enthält. In Fig. 1 ist schematisch angedeutet, wie ein derartiges Filter hergestellt wird. Es wird ein Element aus einem durchlässigen lichtempfindlichen Werkstoff genommen, mit einem parallelen Lichtstrom 6 durch ein optisches System 7 von einer Lichtquelle 8 bestrahlt. Im Vorgang der Bestrahlung wird das zu bestrahlende Element vor einem Metallspiegel 9 angeordnet, der nach der Bestrahlung entfernt wird. Die Bestrahlung erfolgt mit mindestens einer monochromatischen Strahlung vorgegebener Wellenlänge

Die vom Spiegel 9 reflektierte Welle des Lichtstroms 6 interferiert mit einer auffallenden Welle, wodurch Stehwellen gebildet werden. In den Bäuchen 10 und Knoten 11 der Stehwellen ändert sich der Brechungsindex des lichtempfindlichen Werkstoffes verschieden.

Infolge der durchgeführten Bestrahlung erhält das Element aus dem lichtempfindlichen Werkstoff eine Schichtstruktur 1. Die Wellenbäuche 10 entsprechen, indem sie bei dem zu bestrahlenden Element äquidistant in einem Abstand von $\lambda_0/2n$ zueinander, wo n der Brechungsindex des Werkstoffes ist, zu liegen kommen, in der Schichtstruktur 1 den äquidistanten Schichten 2 bis 5, weshalb die Periodizität der Schichten 2 bis 5 und folglich die Schichtdicke

$$d = \lambda_0/2n \qquad\qquad (I)$$

ist. Durch Vertikallinien sind Ebenen 12 maximaler Änderung des Brechungsindexes des lichtempfindlichen Werkstoffes schematisch angedeutet. Die Zahl N der Schichten 2 bis 5 in der Schichtstruktur 1 hängt von der Dicke D des zu bestrahlenden Elements und der Dicke d jeder Schicht 2 bis 5 ab und wird durch die Beziehung

$$N = D/d = D \cdot 2n/ \lambda_0 \qquad\qquad (2)$$

gegeben.

Jede Schicht 2 bis 5 ist teilreflektierend für eine auf die Schichtstruktur gerichtete Lichtstrahlung. Die Interferenz der von den Schichten 2 bis 5 reflektierten Strahlen weist ein Maximum für eine bestimmte Wellenlänge auf, die dem Gangunterschied der Interferenzwellen gleich ist. Die Strahlung dieser Wellenlänge wird bei der Reflexion durch das betrachtete Lichtfilter abgefiltert.

Das zu bestrahlende Element ist aus einem durchlässigen lichtempfindlichen Werkstoff hergestellt, als welches entweder eine Fotoemulsion auf der Basis von Silbersalzen oder bichromierte Gelatine, oder fotoregistrierendes Polymerisationsmittel, oder eine fotopolymerisierende Stoffkomposition eingesetzt werden.

Die Schichtstruktur 1 weist ein Substrat auf, als welches entweder ein Prisma 13 (Fig. 2) oder ein optischer Keil 14 (Fig. 3) verwendet wird, oder das Substrat hat die Form einer Linse I5 (Fig. 4).

Beim Prisma 13 (Fig. 2) ist die Schichtstruktur 1 auf eine reflektierende Fläche 16 aufgetragen, während die Lichtstrahlung 17 auf eine beliebige freie Fläche 18 gerichtet wird. Die abgefilterte Strahlung 19 tritt durch eine andere Fläche 20 des Prismas 13 heraus.

In ähnlicher Weise ist die Schichtstruktur 1 auf eine Fläche 21 (Fig. 3) des optischen Keiles 14 aufgebracht, die Lichtstrahlung 17 wird auf dessen Fläche 22 gerichtet, und die abgefilterte Strahlung 19 tritt durch die gleiche Fläche 22 heraus.

Bei Benutzung der Linse 15 (Fig. 4) weist das Lichtfilter eine der oben beschriebenen ähnliche Konstruktion auf und fokussiert die Strahlung 17 neben ihrer Abfilter- und im Brennpunkt 23 der Linse 15, wenn die Lichtstrahlung 17 kollimiert war.

Die an der Grenze Umgebungsmedium - Lichtfilter reflektierte Strahlung 24 (Fig. 2 bis 4) weist in sämtlichen betrachteten Ausführungsformen eine von der abgefilterten Strahlung 19 abweichende Richtung auf.

Das Substrat kann mehr als ein Prisma 13 oder einen Keil 14, wie in Fig. 5 und 6 gezeigt, enthalten. Hierbei liegen die Prismen 13' (bzw. Keile 14') entlang der Struktur 1, und deren Zahl hängt von der Länge der Struktur 1 ab. Jedes der Prismen 13' weist Abmessungen und folglich eine Masse auf, die viel geringer als in der Ausführungsform nach Fig. 2 sind, wenn ein Prisma 13 verwendet ist. Die Masse und Abmessungen aller Prismen 13' sind kleiner als die Masse und Abmessungen des Prismas 13.

Die gesamten Abmessungen und die Masse des gesamten Lichtfilters nach Fig. 5 sind daher wesentlich geringer als in der Ausführungsform nach Fig. 2, und man kann behaupten, dass die Konstruktion des gesamten Lichtfilters dabei quasiflach ist. Ähnlich ist die Konstruktion des Lichtfilters auch bei Verwendung einer Vielzahl von Keilen 14' (Fig. 6).

Das zu bestrahlende Element kann der Einwirkung zweier und mehrerer Strahlungen mit verschiedenen Wellenlängen unterzogen werden. Hierbei werden im Element Kombinationen von diesen Wellenlängen zugeordneten äquidistanten Schichten gebildet. Die Kombinationen der Schichten in der Schichtstruktur werden in verschiedener Weise angeordnet, die durch die Aufgaben und Bestimmung des fertigen Lichtfilters festgelegt werden,

In Fig. 7 liegen die Kombinationen 25 und 26 der Schichten 2 bis 5 und 2', 3', 4', 5' hintereinander im Strahlengang der Strahlung 17 (Fig. 2). Das Lichtfilter weist zwei Substrate 27 (Fig. 7) und 28 aus Glas auf.

In Fig. 8 sind die Kombinationen 29, 30 und 31 räumlich längs der Schichtstruktur 1 auseinandergebracht, die Einzelabschnitte aufweist, weshalb dementsprechend die durch alle Kombinationen 29 bis 31 jeweils abgefilterten Strahlungen 32, 33, 34 jeweiliger Wellenlänge $\lambda_1$, $\lambda_2$, $\lambda_3$, die infolge der Strahlenwirkung auf jeden Abschnitt der Struktur 1 erschienen sind, im Raum auseinandergebracht sind.

In Fig. 9 sind die Kombinationen 29', 30' und 31' der Schichten ebenso wie die durch diese abgefilterten Strahlungen jeweiliger Wellenlänge $\lambda_1$, $\lambda_2$, $\lambda_3$ zur Deckung gebracht.

In Fig. 10 ist ein Lichtfilter schematisch angeordnet, für dessen Herstellung ein Element durch eine Strahlung mit einem kontinuierlichen Spektrum bestrahlt wurde.

Die Schichten 2", 3", 4", 5" liegen in einer Schichtstruktur 35 äquidistant in einem Querschnitt durch eine zu einer der Schichten 2" bis 5" und zu der Richtung einer Änderung der Dicke der Schichten 2" bis 5" senkrecht verlaufende Ebene 36. Hierbei ändert sich die Dicke der Schichten 2" bis 5" entlang der Schichtstruktur 35 monoton. Derartiges Lichtfilter gestattet es, ein Spektrum einer zu untersuchenden Strahlung zu erhalten oder eine stufenlose Umstellung der Wellenlänge der abgefilterten Strahlung 17 (Fig. 1) durch Verschiebung desselben vor irgendwelcher Blende in Spaltform (in der Zeichnung nicht gezeigt) vorzunehmen.

Ähnliche Funktionsfähigkeiten besitzt ein Lichtfilter, bei dem auf der Schichtstruktur 1 (Fig. 11) eine Einrichtung 37 für ein Zusammendrücken derselben angeordnet ist. Sie enthält eine Schraubzwinge 38 und eine Schraube 39, die die Druckkraft der Schraubzwinge 38 ändert. Die Schichtstruktur 1 wird aus einem elastischen kompressiblen Material, beispielsweise aus bichromierter Gelatine, hergestellt.

Infolge der Zusammendrückung der Schichtstruktur 1 weisen die Schichten 2" bis 5" bei dieser eine Äquidistanz (Fig. 12) lediglich in einem Querschnitt in Analogie dazu, wie dies in Fig. 10 gezeigt ist, auf.

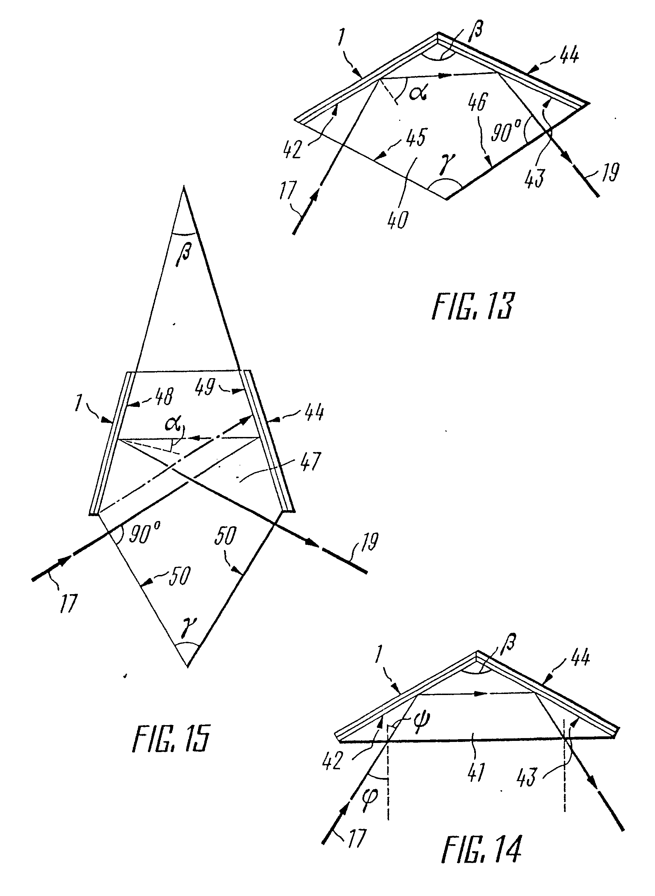

Das erfindungsgemässe Prisma kann im Schnitt die Form eines Rhomboids 40 (Fig. 13) oder eines gleichschenkligen Dreiecks 41 (Fig. 14) aufweisen, das eine spezielle Ausführung des Rhomboids darstellt und dessen Eigenschaften daher getrennt nicht betrachtet werden. Auf zwei symmetrische Seitenflächen 42 (Fig. 13), 43 des Rhomboids 40 sind zwei Schichtstrukturen 1 und 44 aufgebracht. Die Lichtstrahlung 17 wird auf eine freie Fläche 45 gerichtet, während die abgefilterte Strahlung 19, indem sie aufeinanderfolgend von den Schichtstrukturen 1 und 44 reflektiert wird, durch die andere freie Fläche 46 austritt. Der Winkel $\gamma$ zwischen den freien Flächen 45 und 46 wird anhand folgender Beziehungen:

$$\gamma = 2\beta \quad , \text{ wenn } \beta \leq 90^{\circ} \text{ ist}$$
$$\gamma = 360^{\circ} - 2\beta \quad , \text{ wenn } \beta > 90^{\circ} \text{ ist,} \qquad (3)$$

gewählt, wobei $\beta$ der Winkel zwischen den Flächen 42 und 43 ist, auf die die Schichtstrukturen 1 bzw. 44 aufgetragen sind.

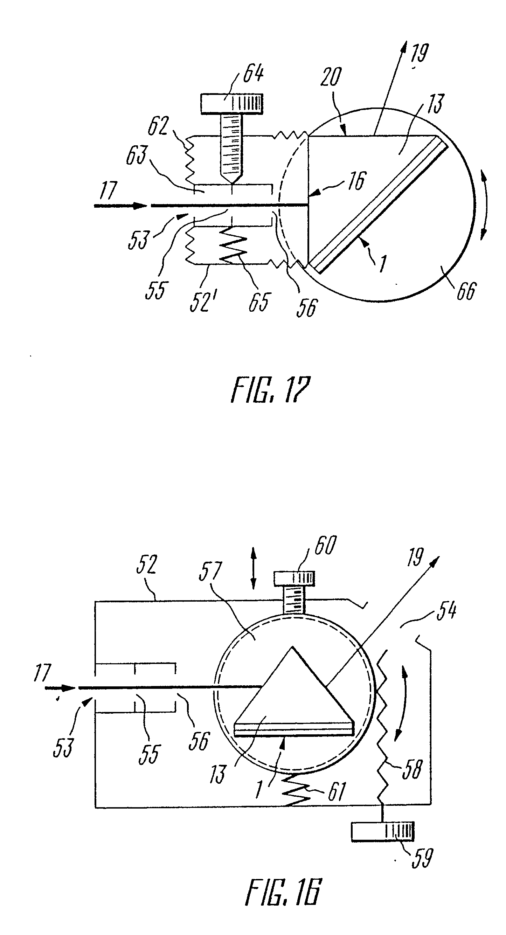

In einer allgemeineren Ausführungsform weist das Prisma 47 (Fig. 15) eine komplizierte Form mit mindestens zwei Paaren von paarweise symmetrischen Seitenflächen 48, 49 bzw. 50, 51 mit einer gemeinsamen Symmetrieebene auf: bei einem Paar der Flächen 48, 49 sind die Schichtstrukturen 1, 4 aufgetragen, während die Winkel $\beta$ und $\gamma$ zwischen den Flächen 48, 49 bzw. 50, 51 der Paare gemäss Beziehung (3) gewählt werden. Die Lichtstrahlung 17 trifft auf die freie Fläche 50 auf und wird sequentiell von den Strukturen 44 und 1 reflektiert, während die abgefilterte Strahlung 19 durch die freie Fläche 15 heraustritt.

In Fig. 16 weist das die Schichtstruktur 1 auf dem Prisma 13 enthaltende Lichtfilter einen Körper 52 auf, in dem eine Eintrittsöffnung 53 zum Durchgang der Strahlung 17 und eine Öffnung 54 zum Austritt der abgefilterten Strahlung 19 ausgeführt sind. Die Eintrittsöffnung 53 bildet, indem sie einem System von Öffnungen 55, 56 gehört, eine Blende, als welche beispielsweise ein beliebiger Lichtleiter auftreten kann.

Die Schichtstruktur 1 ist bezüglich der zugeführten Strahlung 17 schwenkbar um den Körper 52 mit der Möglichkeit einer gleichzeitigen oder getrennten Längsverschiebung erzeugt. Zu diesem Zweck hat das Prisma 13 mit der Schichtstruktur ein Drehwerk, das beispielsweise einen Schneckentrieb 57, 58 und einen Handgriff 59 enthält. Das Prisma 13 ist am Zahnrad 57 des Schneckentriebes 57, 58 befestigt. Darüber hinaus wird das Prisma mittels einer Schraube 60 linear verschoben, die mit dem durch eine Feder 61 gefederten Zahnrad 57 zusammenwirkt.

Die Strahlung 17 wird durch eine durch die Öffnungen 53, 55, 56 gebildete Blende zum Prisma durchgelassen und tritt nach der Abfilterung durch die Öffnung 54 an der gegenüberliegenden Wand des Körpers 52 heraus.

Der Körper 52' (Fig. 17) kann ausserhalb des Lichtfilters angeordnet werden, und dessen eine Wand dient als Eintrittsfläche 16 des Prismas 13. An der gegenüberliegenden Wand 62 des Körpers 52' ist eine Blende angeordnet, die durch ein System von Öffnungen 53, 55 und 56 in einer Hülse 63 gebildet ist. Die Längsverschiebevorrichtung des Prismas 13 enthält eine Schraube 64 und eine Feder 65, die mit der Hülse 63 der Blende zusammenwirken und eine gegenseitige Längsverschiebung der Blende und des Prismas 13 ermöglichen, indem sie den Winkel des Einfalls der Strahlung 17 auf die Schichtstruktur 1 ändern. Die Schwenkung des auf einem Drehlager 66 befestigten Prismas 13 wird durch Formänderung des Körpers 52' erreicht, als welcher ein Wellrohr dient. Die abgefilterte Strahlung 19 verlässt das Lichtfilter durch die Fläche 20.

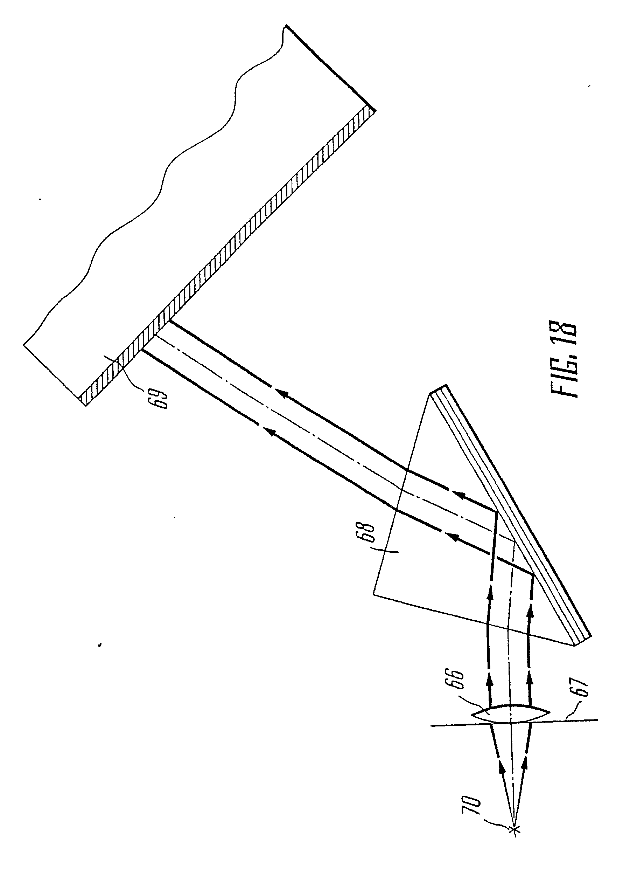

Auf der Basis des selektiven Interferenzlichtfilters ist ein optisches Gerät (Fig. 18) geschaffen, das das vorliegende Lichtfilter als selektierendes Element enthält. Das optische Gerät enthält ein Kollimatorobjektiv 66, dessen Fassung 67 als Eintrittsöffnung dient, ein Lichtfilter 68 und einen Strählungsempfänger 69. Das optische Gerät der gegebenen Konstruktion stellt einen spaltlosen lichtstarken Monochromator dar.

Zur Erweiterung der Funktionsfähigkeiten ist in das optische Gerät eine Strahlungsquelle 70 eingeführt, die durch ein kontinuierliches Spektrum gekennzeichnet wird. In diesem Fall dient das Gerät als monochromatischer Reflektor mit einer regelbaren Wellenlänge.

Das selektive Interferenzlichtfilter funktioniert wie folgt.

Auf das Lichtfilter wird eine Lichtstrahlung 17 gerichtet, und jede Schicht 2 bis 5 (Fig. 2) der Schichtstruktur 1 reflektiert einen geringen Teil dieser Strahlung. Es wird eine reflektierte Strahlung 19 gebildet, die viele Lichtstrahlen enthält, die untereinander einen konstanten Gangunterschied aufweisen, der von der Schichtdicke d, dem Brechungsindex n und dem Winkel $\alpha$ des Lichteinfalls auf die Schichtstruktur 1 abhängt. Das Ergebnis des Interferenz läuft darauf hinaus, dass das Interferenzmaximum nur für diejenige Wellenlänge $\lambda$ erreicht wird, die der Bedingung

$$\lambda = 2 \, d \, \mathrm{n \cdot cos} \, \alpha \qquad\qquad (4)$$

genügt.

Indem man den Winkel $\alpha$ des Lichteinfalls auf das Filter ändert, kann man die Wellenlänge der reflektierten Strahlung 19 ändern.

Der lichtempfindliche Werkstoff des zu bestrahlenden Elements wird praktisch durchsichtig für die Sollwellenlänge $\lambda_o$ gewählt, der zugleich seinen Brechungsindex unter der Lichtwirkung geringfügig ändert sowie eine ausreichende Auflösung für die Bildung einer Schichtstruktur besitzt (die inneren Inhomogenitäten sollen im Stoff kleiner als $\lambda/15$ sein).

Im Lichtfilter mit dem Substrat ist die an der Grenze Luft-Lichtfilter reflektierte Strahlung 21 von der durch die Schichten 2 bis 5 reflektierten Strahlung 19 linear abgetrennt oder breitet sich sogar in einer anderen Richtung aus. Deshalb interferiert sie mit der Strahlung 19 nicht und verzerrt das Interferenzbild auch nicht.

Dient als Substrat ein Prisma oder ein optischer Keil, so ist die Abtrennung der an der Grenze Luft - Lichtfilter reflektierten Strahlung 24 winkelig, und der Umstellbereich für die Wellenlänge ist breiter als im Falle eines planparallelen Substrats.

Bei Benutzung der Linse 15 (Fig; 4) in der reflektierten Strahlung 19 wird das Maximum für eine Wellenlänge beobachtet, wobei das monochromatische Licht im Brennpunkt 23 der Linse 15 fokussiert wird, wenn das Filter ein planparalleler Lichtstrahl einfällt.

Das Lichtfilter mit den Kombinationen 25 und 26, 29, 30 und 31 reflektiert beim Einfall der durch ein kontinuierliches Spektrum gekennzeichneten Strahlung 17 auf dieses zwei oder mehr Wellenlängen, wobei die Wellen im Raum zur Deckung oder auseinandergebracht werden können (29', 30' und 31' bzw. 29, 30, 31).

Beim Einfall der Strahlung 17 auf verschiedene Abschnitte des in Fig. 8 dargestellten Lichtfilters, die verschiedene Schichtdicken aufweisen, werden verschiedene Wellenlängen $\lambda_1$, $\lambda_2$, $\lambda_3$, zurückgestrahlt.

Bei einer gegenseitigen Verschiebung (Verschiebung X) des Lichtfilters und des Strahls der auffallenden Lichtstrahlung ohne Änderung des Winkels des Einfalls der Strahlung auf das Filter ändert sich die Wellenlänge $\lambda$ des reflektierten Lichts. Hierbei wird die Möglichkeit der Änderung der Wellenlänge des Reflexionslichts durch Änderung des Winkels des Lichteinfalls auf das Filter beibehalten. Die Konstruktion des in Fig. 11, 12 dargestellten Lichtfilters gibt die Möglichkeit, den Wert d $\lambda$/dx, d.h. die Dispersion des Lichtfilters zu ändern.

Fällt auf das Lichtfilter eine durch ein beliebiges Spektrum gekennzeichnete Strahlung und auch unter beliebigen Winkeln auf, so reflektiert das Lichtfilter gemäss Fig. 13, 14 nur eine Wellenlänge und nur in dem Fall, wenn die Welle dieser Länge auf das Lichtfilter unter einem bestimmten Winkel einfällt (die Parameter des Prismas werden derart gewählt, dass eine auf das Lichtfilter normal zur Eintrittsfläche 31 einfallende Strahlung abgetrennt wird).

Das Lichtfilter, das in der Weise, wie in Fig. 15, 16, 17 gezeigt, ausgeführt ist, trennt nur ein auf dieses normal einfallendes Licht ab, weil beispielsweise die Blende (Fig. 16, 17) keine schiefwinklig auffallenden Strahlen durchlässt, und bei einer bestimmten gegenseitigen Orientierung der Blende und der Schichtstruktur 1 filtert das Lichtfilter das Licht nur einer Wellenlänge ab. Durch Änderung der gegenseitigen Orientierung der Blende und der Schichtstruktur 1 wird das Lichtfilter auf eine beliebige Wellenlänge aus einem Sollbereich eingestellt. Durch Änderung der Ausrichtung des Lichtfilters führt man eine Winkelabtastung durch, d.h. man bestimmt die Richtung auf die Lichtquelle mit einer Sollwellenlänge (in den Zeichnungen nicht gezeigt).

Das optische Gerät, welches das betrachtete Lichtfilter als selektierendes Element, ein Kollimatorelement und einen Strahlungsempfänger enthält, kann auch als spaltloser lichtstarker Monochromator arbeiten, mit dessen Hilfe das Spektrum beliebiger, darunter auch schwacher, Strahlungsquellen analysiert wird. Das Licht von der Quelle fällt auf das Objektiv ein, während das Lichtfilter 1 die gewählte Wellenlänge reflektiert und auf den Strahlungsempfänger lenkt. Durch Schwenken des Lichtfilters wird auf eine andere Wellenlänge übergegangen.

Ist in das optische Gerät, das das erfindungsgemässe Lichtfilter als selektierendes Element enthält, eine durch ein kontinuierliches Spektrum gekennzeichnete Strahlungsquelle eingeführt, so wird das Gerät zum Bestrahlen verschiedener Objekte eingesetzt. In diesem Fall fällt das Licht von der Quelle mit dem kontinuierlichen Spektrum auf das Kollimatorobjektiv ein, wird durch das Lichtfilter abgefiltert. Am Austritt wird eine monochromatische Strahlung erzeugt, die das Objekt bestrahlt.

Nachstehend werden Beispiele konkreter Ausführungsformen des betrachteten Lichtfilters aufgeführt.

Beispiel 1

Das selektive Interferenzlichtfilter weist eine Schichtstruktur auf, die aus einer Fotoemulsion hergestellt ist, die ein Silberbromid enthält. Die Dicke der Schichtstruktur beträgt 18 μm. Darin werden mindestens 85 Schichten enthalten. Der Brechungsindex variiert von 1,52 bis 1,60. Die Schichtstruktur ist durch das Licht eines He-Ne-Lasers mit einer Wellenlänge $\lambda_o$ = 633 nm erzeugt. Die abgefilterte Strahlung weist die Wellenlänge $\lambda$ in einem Bereich von 480 bis 633 nm auf. Der Reflexionsfaktor beläuft sich auf bis zu 40% im grünen Spektralbereich. Die spektrale Bandbreite macht 8 bis 10 nm im gesamten Umstellbereich für die Wellenlänge aus.

Beispiel 2

Das selektive Interferenzlichtfilter enthält eine Schichtstruktur, die aus bromierter Gelatine (mit Ammoniumdichromat) hergestellt ist. Die Dicke der Schichtst-ruktur beträgt 10 μm. Darin sind mindestens 60 Schichten enthalten. Der Brechungsindex variiert von 1,50 bis 1,60. Die Schichtstruktur ist durch das Licht eines $Ar^+$-Lasers mit einer Wellenlänge $\lambda_o$ = 488 nm erzeugt. Die abgefilterte Strahlung weist die Wellenlänge $\lambda$ in einem Bereich von 380 bis 488 nm auf. Der Reflexionsfaktor beträgt bis zu 70% im blaugrünen Spektralbereich. Die spektrale Bandbreite liegt zwischen 5 und 6 nm.

Beispiel 3

Das selektive Interferenzlichtfilter enthält eine Schichtstruktur, die aus fotoregistrierendem Polymerisationsmittel vom Typ eines registrierenden Oxydationsmittels mit Anthrazen hergestellt ist. Die Dicke der Schichtstruktur beträgt 1 nm. Darin sind mindestens 4500 Schichten enthalten. Die Schichtstruktur ist durch das Licht eines He-Ne-Lasers mit einer Wellenlänge $\lambda_o$ = 633 nm erzeugt. Die abgefilterte Strahlung weist die Wellenlänge $\lambda$ in einem Bereich von 475 bis 633 nm auf. Der Reflexionsfaktor beträgt bis zu 10% im grünen Spektralbereich. Die spektrale Bandbreite macht 0,1 bis 0,2 nm aus.

Beispiel 4

Das selektive Interferenzlichtbereich enthält eine Schichtstruktur, die aus flüssiger polymerisierender Komposition hergestellt ist. Die Komposition weist ein radikal polymerisierendes Vinylmonomer und ein Stabilisierungsmittel auf. Die Dicke der Schichtstruktur beträgt 20 μm. Die Struktur ist durch das Licht eines He-Cd-Lasers mit einer Wellenlänge $\lambda_o$ = 422 nm erzeugt und enthält ca. 130 Schichten. Die abgefilterte Strahlung weist eine Wellenlänge von 350 bis 442 nm auf. Der Reflexionsfaktor beträgt 15%, die spektrale Bandbreite 3 bis 4 nm.

Beispiel 5

Das selektive Interferenzlichtfilter enthält eine Schichtstruktur, die aus einer Silberbromid aufweisenden Fotoemulsion hergestellt ist. Die Dicke der Schichtstruktur beträgt 21 $\mu$m. Darin sind mindestens 100 Schichten enthalten. Die Schichtstruktur ist durch das Licht eines He-Ne-Lasers mit einer Wellenlänge $\lambda_0$ = 633 nm erzeugt. Die Shichtstruktur liegt Auf der Hypotenusenfläche eines dreiseitigen Prismas auf, das Winkel von 90°, 45°, 45° besitzt. Die abgefilterte Strahlung weist die Wellenlänge in einem Bereich von 360 bis 610 nm auf. Der Reflexionsbereich bewegt sich von 40% im roten und violetten Spektralbereich bis 70% im grünen Spektralbereich. Die spektrale Bandbreite macht 8 bis 10 nm aus.

Beispiel 6

Das selektive Interferenzlichtfilter enthält eine Schichtstruktur, die aus einer Silberbromid aufweisenden Fotoemulsion hergestellt ist. Die Dicke der Schichtstruktur beträgt 21 $\mu$m. Darin sind mindestens 100 Schichten enthalten. Die Schichtstruktur ist durch das Licht eines He-Ne-Lasers mit einer Wellenlänge $\lambda_0$ = 633 nm erzeugt. Die Schichtstruktur ist auf eine Fläche eines optischen Keiles mit einem Winkel von 30° aufgebracht. Die abgefilterte Strahlung weist die Wellenlänge in einem Bereich von 570 bis 633 nm auf. Der Reflexionsfaktor macht ca. 60% aus.

Beispiel 7

Das selektive Interferenzlichtfilter enthält eine Schichtstruktur, die aus einer Silberbromid aufweisenden Fotoemulsion hergestellt ist. Die Dicke der Schichtstruktur beträgt 21 $\mu$m. In einem Teil der Platte ist die Schichtstruktur aus der Fotoemulsion durch die Strahlung eines He-Ne-Lasers mit einer Wellenlänge $\lambda_{01}$ = 633 nm, im anderen Teil durch die Strahlung eines Ar$^+$ - Lasers mit einer Wellenlänge $\lambda_{02}$ = 488 nm erzeugt.

Die Schichtstruktur ist auf ein flaches Substrat aufgetragen. Die abgefilterte Strahlung weist zwei Wellenlängen auf, die sich im Bündel nebeneinander fortpflanzen. Ist im Strahlenweg der abgefilterten Strahlung ein Schirm aufgestellt, so besteht der Fleck auf dem Schirm aus zwei Teilen verschiedener Farbe. Bei einer Änderung des Winkels des Einfalls der Lichtstrahlung auf das Filter von 0 bis 35° ändern sich die beiden Längen, von denen sich die kleinere von 380 bis 488 nm und die grössere von 570 bis 633 nm ändert.

Beispiel 8

Das selektive Interferenzlichtfilter enthält eine Schichtstruktur, die aus einer Silberbromid aufweisenden Fotoemulsion hergestellt ist. Die Dicke der Schichtstruktur beträgt 42 $\mu$m Die Schichtstruktur ist durch Strahlungen zweier Laser mit Wellenlängen $\lambda'$ = 633 nm bzw. $\lambda_0''$ = 488 nm erzeugt. Die durch den ersten Laser erzeugten Schichten nehmen eine halbe Dicke der Platte ein, die andere halbe Dicke wird von den durch den zweiten Laser erzeugten Schichten besetzt. Die erste Kombination der Schichten liegt zuerst im Strahlenweg der auf das Filter einfallenden Strahlung. Die Analyse der abgefilterten Strahlung zeigt, dass sie zwei Wellenlängen bei gleichem Winkel des Einfalls auf das Filter enthält. Bei Änderung des Einfallswinkels ändern sich die Wellenlängen der abgefilterten Strahlung von 570 bis 633 und von 350 bis 488 nm für $\lambda_0'$ bzw. $\lambda_0''$.

Beispiel 9

Das selektive Interferenzlichtfilter enthält eine Schichtstruktur, die aus einer Silberbromid aufweisenden Fotoemulsion hergestellt ist. Die Struktur ist durch eine Strahlung mit einer Wellenlänge $\lambda_0$ = 633 nm erzeugt und auf die beiden Kathetenflächen eines dreiseitigen Prismas aufgebracht, das Winkel von 90°, 45°, 45° aufweist und einen Spezialfall eines Rhomboids darstellt. Das Filter wird von einer durch ein kontinuierliches Spektrum gekennzeichneten Quelle bestrahlt, es wird eine Strahlung mit einer Wellenlänge von 449 nm und mit einer spektralen Bandbreite von 10 nm, nur aber bei einem normalen Einfall der Strahlung auf das Filter abgefiltert. Bei Änderung des Einfallswinkels um 1° fällt die Intensität der

EP 0 416 105 A1

abgefilterten Strahlung um das Doppelte ab, während bei einer Änderung des Einfallswinkels um 2° das Filter praktisch keine Lichtstrahlung durchlässt.

Das erfindungsgemässe Lichtfilter ist selektiv, schmalbandig, umstellbar nach der Wellenlänge. Es kann einfacher in der Herstellung und multifunktional in der Anwendung sein.

Das umstellbare Lichtfilter, das einen Umstellbereich von 240 nm bei einer spektralen Bandbreite von 8 nm aufweist, kann 30 unumstellbare Lichtfilter mit der gleichen Spektralbande ersetzen. Mit Rücksicht auf die Kosten eines Lichtfilters bringt die Anwendung der Erfindung einen spürbaren ökonomischen Effekt.

Gewerbliche Anwendbarkeit

Die Erfindung kann in der Spektroskopie, Lichttechnik, im optischen und Lasergerätebau, bei der Durchführung von Weltraumforschungen angewendet werden.

**Ansprüche**

1. Selektives Interferenzlichtfilter, das eine Schichtstruktur (1) aufweist, deren jede Schicht (2 bis 5) für eine auf das Lichtfilter gerichtete Strahlung (17) reflektierend ist, **dadurch g ekennzeichnet,** dass die Schichten (2 bis 5) der Schichtstruktur (1) äquidistant mit einem sich nach der Tiefe periodisch ändernden Brechungsindex ausgeführt und durch Bestrahlung eines vor einem Spiegel (9) erst im Vorgang der Bestrahlung angeordneten Elementes aus einem für die Strahlung durchlässigten lichtempfindlichen Werkstoff mit mindestens einer monochromatischen Strahlung (6) vorgegebener Wellenlänge gebildet sind.

2. Selektives Interferenzlichtfilter nach Anspruch 1, **dadurch gekennzeichnet,** dass das zu bestrahlende Element entweder aus einer Fotoemulsion auf der Basis von Silbersalzen oder aus bichromierter Gelatine, oder aus fotoregistrierendem Polymerisationsmittel,oder aus fotopolymerisierender Stoffkomposition hergestellt ist.

3. Selektives Interferenzlichtfilter nach Anspruch 1 oder 2, **dadurch gekennzeichnet,**
dass es ein Substrat aufweist, auf welches eine Schichtstruktur (1) aufgebracht ist.

4. Selektives Interferenzlichtfilter nach Anspruch 3, **dadurch gekennzeichnet,** dass als Substrat mindestens ein Prisma (13) dient, auf dessen Reflexionsfläche (16) eine Schichtstruktur (1) aufliegt, während die Lichtstrahlung (17) auf eine beliebige freie Fläche (18) des Prismas (13) gerichtet wird.

5. Selektives Interferenzlichtfilter nach Anspruch 3, **dadurch gekennzeichnet,** dass als Substrat mindestens ein optischer Keil (14) dient, auf dessen eine Fläche (21) eine Schichtstruktur (1) aufgebracht ist, während die Lichtstrahlung (17) auf dessen andere Fläche (22) gerichtet wird.

6. Selektives Interferenzlichtfilter nach Anspruch 3, **dadurch gekennzeichnet,** dass als Substrat ein die Form einer Linse (15) aufweisendes Element dient.

7. Selektives Interferenzlichtfilter nach Anspruch 1 oder 2, **dadurch gekennzeichnet,**
daß bei der Bestrahlung eines Elementes aus lichtempfindlichen Material durch zwei oder mehr monochromatische Strahlungen mit verschiedenen Wellenlängen die Schichtstruktur (1) jeweils zwei oder mehr Kombinationen (25, 26) äquidistanter Schichten (2 bis b, 2' bis 5,) aufweist, deren jede einer eigenen Wellenlänge der monochromatischen Strahlung zugeordnet ist.

8. Selektives Interferenzlichtfilter nach Anspruch 3, **dadurch gekennzeichnet,** daß bei der Bestrahlung eines Elementes aus lichtempfindlichen Material durch zwei oder mehr monochromatische Strahlungen mit verschiedenen Wellenlängen die Schichtstruktur (1) jeweils zwei oder mehr Kombinationen (25, 26) äquidistanter Schichten (2 bis b, 2' bis 5') aufweist, deren jede einer eigenen Wellenlänge der monochromatischen Strahlung zugeordnet ist.

9. Selektives Interferenzlichtfilter nach Anspruch 7, **dadurch gekennzeichnet,** dass in der Schichtstruktur (1) die Kombinationen (25, 26) der äquidistanten Schichten (2 bis 5, 2' bis 5,) im Strahllengang der auf

12

die Schichtstruktur (1) gerichteten Lichtstrahlung (17) hintereinander angeordnet sind.

10. Selektives Interferenzlichtfilter nach Anspruch 7, **dadurch gekennzeichnet,** dass in der Schichtstruktur (1) die Kombinationen (29', 30', 31') der äquidistanten Schichten im Strahlengang der auf die Schichtstruktur (1) gerichteten Lichtstrahlung (17) hintereinander angeordnet und räumlich zur Deckung gebracht sind.

11. Selektives Interferenzlichtfilter nach Anspruch 7, **dadurch gekennzeichnet,** dass die Schichtstruktur (35) Schichten (2" bis 5") aufweist, deren Äquidistanz im Querschnitt der Schichtstruktur (35) durch eine Ebene (36) erfüllt wird, die gleichzeitig zu einer beliebigen Schicht (2" bis 5" ) und zu der Richtung der Änderung der Dicke der Schichten (2" bis 5") perpendikular ist und durch eine Strahlung gebildet ist, die durch ein kontinuierliches Spektrum charakterisiert wird.

12. Selektives Interferenzlichtfilter nach Anspruch 7, **dadurch gekennzeichnet,**
dass zwei oder mehr Kombinationen der äquidistanten Schichten durch Parallelbündel der monochromatischen Strahlung gebildet sind, wobei die Schichtstruktur (1) Einzelabschnitte enthält, die Kombinationen (29, 30, 31) der äquidistanten Schichten darstellen, die den Einzelabschnitten der Wellenfront der auf die Schichtstruktur (1) gerichteten Lichtstrahlung (17) entsprechen.

13. Selektives Interferenzlichtfilter nach den Anspruch 3, **dadurch gekennzeichnet,**
dass auf der Schichtstruktur (1) eine Einrichtung (37) für deren Zusammendrücken angeordnet ist, die für eine lineare Änderung der Dicke der äquidistanten Schichten (2 bis 5) längs der Schichtstruktur (1) sorgt.

14. Selektives Interferenzlichtfilter nach Anspruch 4, **dadurch gekennzeichnet,** dass das Prisma im Schnitt die Form eines Rhomboids (40) aufweist, auf dessen zwei symmetrische Seitenflächen (42, 43) gleiche Schichtstrukturen (1, 44) aufgebracht sind.

15. Selektives Interferenzlichtfilter nach Anspruch 4, **dadurch gekennzeichnet,** dass das Prisma (47) zwei Paare zueinander symmetrischer Seitenflächen (48, 49 und 50, 51) mit einer gemeinsamen Symmetrieebene aufweist und auf jeder Seitenfläche (48, 49) eines Paares die Schichtstrukturen (1, 44) aufliegen.

16. Selektives Interferenzlichtfilter nach Anspruch 5, **dadurch gekennzeichnet,** daß auf der Schichtstruktur (1) eine Einrichtung (37) für deren Zusammendrücken angeordnet ist, die für eine lineare Anderung der Dicke der äquidistanten Schichten (2 bis 5) längs der Schichtstruktur (1) sorgt.

17. Selektives Interferenzlichtfilter nach Anspruche 1 oder 2, **dadurch gekennzeichnet,** dass es einen Körper (52) aufweist, in dessen Wänden zwei Öffnungen (53, 54) für den Durchgang der Strahlung (17) zur Schichtstruktur (1) bzw. für den Austritt der abgefilterten Strahlung (19) ausgeführt sind.

18. Selektives Interferenzlichtfilter nach Anspruch
4, **dadurch gekennzeichnet,** dass es einen Körper (52') aufweist, als dessen eine Wand die Eintrittsfläche (18) des Prismas (13) dient, während an der gegenüberliegenden Wand (62) des Körpers (52') eine Blende für den Durchgang der Strahlung (17) zur Schichtsstruktur (1) angebracht ist.

19. Selektives Interferenzlichtfilter nach Anspruch 5, **dadurch gekennzeichnet,**
dass es einen Körper (52') aufweist, als dessen eine Wand die Eintrittsfläche (18) des optischen Keiles (14) dient, während an der gegenüberliegenden Wand (62) des Körpers (52') eine Blende für den Durchgang der Strahlung (17) zur Schichtsstruktur (1) angebracht ist.

20. Selektives Interferenzlichtfilter nach Anspruch 17, **dadurch gekennzeichnet,**
dass die Schichtstruktur (1) im Körper (52) schwenkbar und/oder linear verschiebbar in bezug auf die zu sendende Strahlung (17) angeordnet ist.

21. Selektives Interferenzlichtfilter nach Anspruch 18 **dadurch gekennzeichnet,**
dass die Schichtstruktur (1) und die Blende mit Möglichkeit einer gegenseitigen Schwenkung und/oder einer linearen Verschiebung ausgeführt sind.

22. Selektives Interferenzlichtfilter nach Anspruch 19, **dadurch gekennzeichnet,** dass die Schichtstruktur (1) und die Blende mit Möglichkeit einer gegenseitigen Schwenkung und/oder einer linearen Verschiebung ausgeführt sind.

23. Optisches Gerät, das ein selektierendes Element zur Abtrennung einer oder mehrerer Wellenlängen von einer darauf einfallenden Strahlung enthält,
**dadurch gekennzeichnet,** dass als selektierendes Element das selektive Interferenzlichtfilter nach Anspruch 1 eingesetzt ist, das um eine auf dieses gerichtete Lichtstrahlung schwenkbar angeordnet ist.

14

FIG. 1

FIG. 2

FIG. 3

FIG. 4

FIG. 5

FIG. 6

FIG. 7

FIG. 8

EP 0 416 105 A1

FIG. 9

FIG. 10

18

FIG. 11

FIG. 12

FIG. 13

FIG. 15

FIG. 14

EP 0 416 105 A1

FIG. 17

FIG. 16

21

FIG. 18

# INTERNATIONAL SEARCH REPORT

International Application No PCT/SU 89/00032

**I. CLASSIFICATION OF SUBJECT MATTER** (If several classification symbols apply, indicate all) *

According to International Patent Classification (IPC) or to both National Classification and IPC

IPC$^5$ – G 02 B 5/28, 26/00

**II. FIELDS SEARCHED**

Minimum Documentation Searched [7]

| Classification System | Classification Symbols |
|---|---|
| IPC$^5$ | G 02 B 5/26, 5/28, 7/18, 26/00, 26/08 |

Documentation Searched other than Minimum Documentation
to the Extent that such Documents are Included In the Fields Searched *

**III. DOCUMENTS CONSIDERED TO BE RELEVANT** *

| Category * | Citation of Document, [11] with indication, where appropriate, of the relevant passages [12] | Relevant to Claim No. [13] |
|---|---|---|
| A | WO, A3, 87/01211 (HUGHES AIRCRAFT COMPANY), 26 February 1987 (26.02.87), see the abstract | I |
| A | US, A, 3799654 (LKB-PRODUKTER AB), 26 March 1974 (26.03.74), see the abstract | I |
| A | SU, AI, 382041 (E.G. STOLOV), 13 August 1973 (13.08.73) | 5 |
| A | SU, AI, 1254398 (LENINGRADSKY GOSUDARSTVENNY UNIVERSITET), 30 August 1986 (30.08.86) | 5 |
| A | GB, B, 1305700 (STANDARD TELEPHONES AND CABLES LIMITED), 07 February 1973 (07.02.73), see figure 2 | 5 |
| A | SU, AI, 862097 (V.D. VVEDENSKY et al. ), 10 September 1981 (10.09.81) | II |
| A,E | WO, AI, 89/05465 (SANTA BARBARA RESEARCH CENTER), 15 June 1989 (15.06.89), see the abstract | II,I3,I6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 18 September 1989 (18.09.89) | 30 October 1989 (30.10.89) |

| International Searching Authority | Signature of Authorized Officer |
|---|---|
| ISA/SU | |

Form PCT/ISA/210 (second sheet) (January 1985)

## FURTHER INFORMATION CONTINUED FROM THE SECOND SHEET

| A | SU, AI, 254820 (F.A. KOROLEV et al.), 9 March 1970 ( 09.03.70) | II-I3,20-22 |
|---|---|---|
| A | GB, B, III7773 (OPTICAL COATING LABORATORY, INC.), 26 June 1968 ( 26.06.68), see figure 3 | II-I 3,20-22 |
| A | SU, AI, 6III66 (V.E. VEDMIN), 15 May 1978 (15.05.78) | 20-22 |

## V. ☐ OBSERVATIONS WHERE CERTAIN CLAIMS WERE FOUND UNSEARCHABLE ¹

This international search report has not been established in respect of certain claims under Article 17(2) (a) for the following reasons:

1. ☐ Claim numbers............, because they relate to subject matter not required to be searched by this Authority, namely:

2. ☐ Claim numbers............, because they relate to parts of the international application that do not comply with the prescribed requirements to such an extent that no meaningful international search can be carried out, specifically:

3. ☐ Claim numbers............ because they are dependent claims and are not drafted in accordance with the second and third sentences of PCT Rule 6.4(a).

## VI. ☐ OBSERVATIONS WHERE UNITY OF INVENTION IS LACKING ²

This International Searching Authority found multiple inventions in this international application as follows:

1. ☐ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)